# EUROPEAN PATENT APPLICATION

(11) **EP 1 736 503 A2**
(43) Date of publication of application: **27.12.2006**
(21) Application number: 06012887.3
(22) Date of filing: 22.06.2006
(51) Int. Cl.: C08K 3/22, C08K 9/04, C08K 5/521, C08K 5/523, C08K 5/524, C08K 5/526

(54) **Resin composition comprising a surface treated metal oxide filler**

(30) Priority: 22.06.2005 JP 2005181756; 27.10.2005 JP 2005313187
(71) Applicant: NISSAN MOTOR CO., LTD., Yokohama-shi Kanagawa-ken (JP)
(72) Inventor: Ito, Tomohiro, Yokohama-shi Kanagawa-ken (JP); Oda, Takashi, Yokosuka-shi Kanagawa-ken (JP); Unno, Haruo, Yokosuka-shi Kanagawa-ken (JP); Kai, Yasuaki, Yokohama-shi Kanagawa-ken (JP)
(74) Representative: Görz, Ingo

(57) **Abstract**

A resin composition of the present invention has resin and a metal oxide particle composite contained in the resin as filler. The metal oxide particle composite has a metal oxide particle and an organic phosphorus compound chemically bonded to a surface of the metal oxide particle. The resin composition includes high aspect ratio metal oxide particles uniformly dispersed and is excellent in both the mechanical properties and transparency.

## Description

### BACKGROUND OF THE INVENTION

### 1. Field of the Invention

The present invention relates to a resin composition and a method of manufacturing the resin composition.

### 2. Description of the Related Art

It is widely known that forming various parts of an automobile with resin contributes to weight reduction of the parts and the automobile. Recently, a polyamide material is applied to an automotive exterior panel, which has been made of a copper plate, mainly for the purpose of weight reduction. Resin has much to contribute to the weight reduction like this. In addition to the exterior panel, a fuel tank, which has been made of a steel plate, is made of a hollow container made of resin mainly containing polyethylene. Metal materials are thus increasingly being replaced by resin materials.

However, on the other hand, most of glass members represented by a windshield are not made of resin at present. Though polycarbonate resin has already obtained transparency and impact resistance comparable to those of glass, generally, resin as an alternative to glass has not been obtained yet because expansion of resin due to heat (for example, a linear expansion coefficient) is extremely larger than that of glass and flexural rigidity thereof is lower than that of glass.

As a measure to reduce the thermal expansion, reinforcement by inorganic filler such as glass fiber or talc has been known. However, to ensure the transparency, there is no other choice but non-reinforced resin. In other words, transparent resin with low thermal expansion and high rigidity is not available yet at present.

On the other hand, as a measure for improving properties of resin, a lot of materials retaining flexibility, low density, moldability, and the like, which are features of resin, and also having high strength, high elastic modulus, heat resistance, electrical properties, and the like, which are features of inorganic compounds, are being actively developed. As such a measure for improving the properties, instead of the conventional resin reinforced by glass fibers or talc, a composite material using nano-order inorganic particles, or a so-called polymer nanocomposite (resin composition), have been drawing attention (see Japanese Patent No. 2519045, Japanese Patent Examined Publication No. H7-47644, Japanese Patent Unexamined Publications No. H10-30039, No. H11-310643, No. 2000-53871, No. H11-343349, No. H7-102112, No. 2003-54941, and No. 2004-149687).

As shown in the above publications, various examinations have been made to obtain the transparent resin with low thermal expansion and high rigidity. However, in these polymer nanocomposites using inorganic particles, the mechanical properties and transparency cannot be compatible with each other yet at a sufficient level.

Meanwhile, the aforementioned object can be predicted to be achieved with a polymer nanocomposite in which nano-order inorganic particles with a wavelength shorter than visible light wavelength and a high aspect ratio are uniformly dispersed in polymer. In this case, the inorganic particles are often subjected to a surface treatment in order to be uniformly dispersed well, and a general' surface treatment agent is a coupling agent having an alkoxy group such as a silane coupling agent. However, metal oxide nanoparticles are often obtained as water dispersion sol having low concentration and are less reactive with polymer in the form of the water dispersion sol. When the sol is treated after the solvent is replaced with an organic solvent, the reaction occurs, but the particles are already aggregated. Accordingly, a capability to separate the aggregated secondary particles into primary particles again, or stronger peptization, is required.

### SUMMARY OF THE INVENTION

As described above, in the case of using the nano-order inorganic particles with a high aspect ratio, the inorganic particles are required to have less fear of being colored and reducing molecular weight of the polymer and further have both excellent dispersibility and peptization. However, this requirement cannot be fulfilled under present circumstances.

The present invention was made in the light of the aforementioned conventional problem, and an object of the present invention is to provide a resin composition which includes high aspect ratio metal oxide particles uniformly dispersed and is excellent in both the mechanical properties and transparency.

The first aspect of the present invention provides a resin composition, comprising: resin; and a metal oxide particle composite contained in the resin as filler, the metal oxide particle composite comprising: a metal oxide particle; and an organic phosphorus compound chemically bonded to a surface of the metal oxide particle.

The second aspect of the present invention provides a method of manufacturing a resin composition comprising: preparing a dispersion liquid with a metal oxide particle composite dispersed in an organic solvent, the metal oxide particle composite comprising: a metal oxide particle; and an organic phosphorus compound chemically bonded to surfaces of the metal oxide particle; mixing the dispersion liquid and resin.

### BRIEF DESCRIPTION OF THE DRAWINGS

The invention will now be described with reference to the accompanying drawings wherein;

FIG. 1 is a schematic view of a metal oxide particle composite of the present invention;

FIG. 2 is a schematic view for explaining a long axis and a short axis;

FIG. 3 is an electron microscope photograph of the metal oxide particle composite of the present invention;

FIG. 4 is an electron microscope photograph of a cross section of the metal oxide particle composite of the present invention;

FIG. 5 is a bonding form of monoacid phosphate and an alumina surface in the metal oxide particle composite of the present invention.

FIG. 6 is a structure formula of a cyclic phosphorus compound in the metal oxide particle composite of the present invention; and

FIG. 7 is a table showing experiment conditions and evaluation results of resin compositions of examples and comparative examples.

### DETAILED DESCRIPTION OF THE PREFERRED EMBODIMENT

The present invention relates to a resin composition characterized by including a metal oxide particle composite 1 having a metal oxide particle 2 chemically bonded to an organic phosphorus compound 3.

As previously described, in the conventional art, in order to improve mechanical properties and the optical properties represented by transparency, a treatment agent is added with the inorganic filler. However, the optical properties are degraded in this case while the mechanical properties are improved, and it has been considered that both properties are impossible to be simultaneously achieved.

In the present invention, in order to solve the problems inherent in the conventional arts, selection of proper particle size and especially the treatment agent was thought to be important, and the problems were solved by selecting a particle surface treatment agent not affecting resin. Specifically, predetermined metal oxide particles are added with an organic phosphorus compound as the particle surface treatment agent to electrostatically bond ions of the organic phosphorus compound to the metal oxide particles. When the thus obtained metal oxide particle composite containing the metal oxide particles and the organic phosphorus compound are dispersed in a predetermined organic solvent, the dispersion can be extremely uniform.

Accordingly, a dispersion liquid of the thus obtained metal oxide particles is blended in the resin while being melted and kneaded, thus obtaining an intended resin composition with the metal oxide particles extremely uniformly dispersed. Consequently, the resin composition can simultaneously improve in the mechanical properties including the strength and the optical properties including the transparency.

Hereinafter, a description is given of each material in detail using the drawings.

### (Metal oxide particle composite)

### <Metal oxide particle>

Examples of the metal oxide particles constituting the metal oxide particle composite of the present invention can be particles of silicon oxide, aluminum oxide, iron oxide, zinc oxide, calcium oxide, titanium oxide, tin oxide, zirconium oxide, magnesium oxide, zinc sulfide, and clay minerals such as talc and kaolinite. In order to make the mechanical properties and optical properties compatible with each other at a high levels, silica, alumina, hematite, titania, and calcia are preferred, and among these, alumina, which is well crystallized and can be formed into nano-size particles with high aspect ratio, is especially preferred.

Moreover, the alumina particles are preferably expressed by the following general formula (I).

Al₂O₃-nH₂O Formula I

When n in the formula is 0, the formula represents an aluminum oxide, which is at least either α, γ, δ or θ alumina. When n in the formula is 1, the formula represents boehmite. Moreover, when n in the formula is more than 1 and less than 3, the formula represents a mixture of boehmite and alumina hydrate with an amorphous structure. This is generally referred to as pseudo boehmite. Furthermore, when n is 3 or more, the formula represents alumina hydrate with an amorphous structure. Among the above alumina particles, particles of α alumina, γ alumina, and boehmite are preferred in terms of stability and easiness in manufacturing.

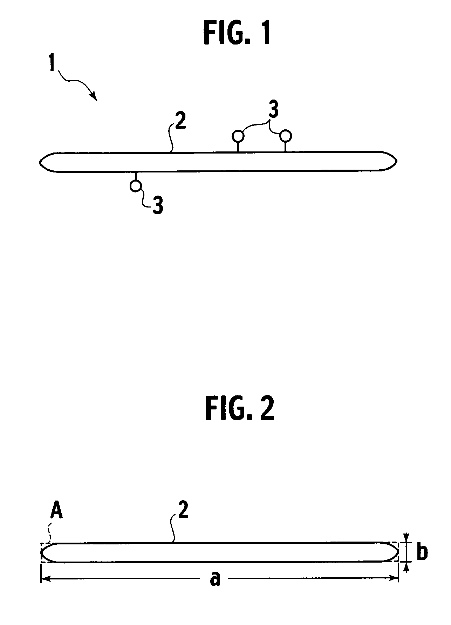

Preferably, the alumina particles have an anisotropic shape such as a fiber-like, spindle-like, stick-like, needle-like, tubular, or columnar shape. It is especially preferable that the shape of the alumina particles exhibits such high anisotropy that a length of a short axis is within a range from 1 to 10 nm, a length of a long axis is within a range from 20 to 700 nm, and an aspect ratio is within a range from 5 to 100. To obtain a highly transparent resin composition by blending the alumina particles therein, in terms of the particle size, it is preferable that the length of the short axis is 6 nm or less and the length of the long axis is within a range from 50 to 500 nm. Furthermore, the length of the long axis is preferably within a range from 20 to 400 nm, and more preferably, within a range from 20 to 100 nm. In other words, it is preferable that the alumina particles are needle-like crystals as shown in FIGS. 1 to 3. In this specification, as shown in FIG. 2, assuming a rectangle A with the smallest area among rectangles circumscribed to a target particle in a microscope image or the like, the long axis indicates a long side a of the rectangle A, and the short axis indicates a short side b of the above smallest rectangle A. The aspect ratio indicates a value of the long axis length/the short axis length (a/b).

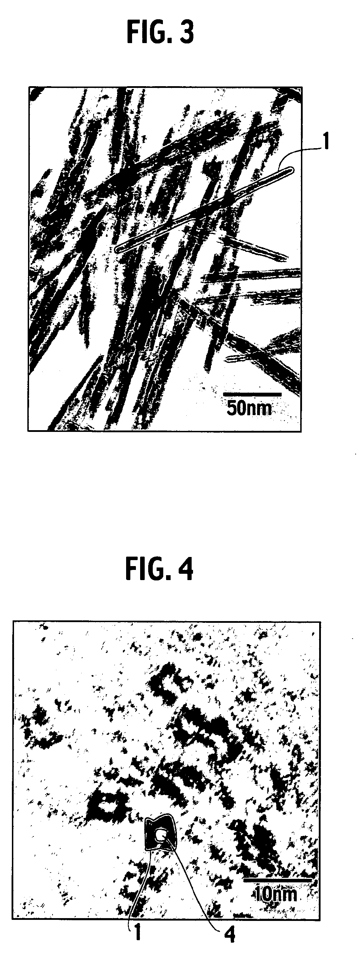

As shown in FIG. 4, each alumina particle 2 includes a cylindrical hollow 4 therein. In terms of the size of the hollow 4, preferably, the diameter thereof is within a range from 0.5 to 9.5 nm according to the short axis length of the particle 2, and the length thereof is within a range from 5 to 400 nm, which is not more than the long axis length of the particles. This can reduce the specific gravity of the alumina particles. Accordingly, when the alumina particles are contained as the filler in the resin, while the weight of the obtained resin composition is maintained at a comparatively lightweight, the mechanical strength of the obtained resin composition can be increased, and the high transparency thereof can be achieved.

### <Organic phosphorus compound>

The metal oxide particle composite of the present invention contains the organic phosphorus compound chemically bonded to the aforementioned metal oxide particles. The organic phosphorus compound is not particularly limited. However, for reasons of reactivity with the particle surface, stability as a compound, and easy availability, phosphate esters, phosphite esters, and cyclic phosphorus compounds are preferred, especially, the phosphate esters are preferred. More preferably, acidic phosphate esters, specifically, phosphate esters including an acid group (P-OH) are suitable. Especially in the case of reaction with the alumina particle surface, AlOH in the surface is basic and has a nucleophilic attacking property. Organic phosphoric acid is coordinated to AlOH by hydrogen bond at low temperature. At room temperature to somewhat higher temperature, the dehydration and de-esterification of organic phosphoric acid progress, and the organic phosphoric acid forms anions to be adsorbed to Lewis acid sites (Al⁺ regions) in the alumina surface. The organic phosphoric acid including an acid group (P-OH group) has therefore higher reactivity with the particle surface and higher peptization. This is true for organic acid in general, but especially organic phosphorus compounds have a pronounced tendency thereof.

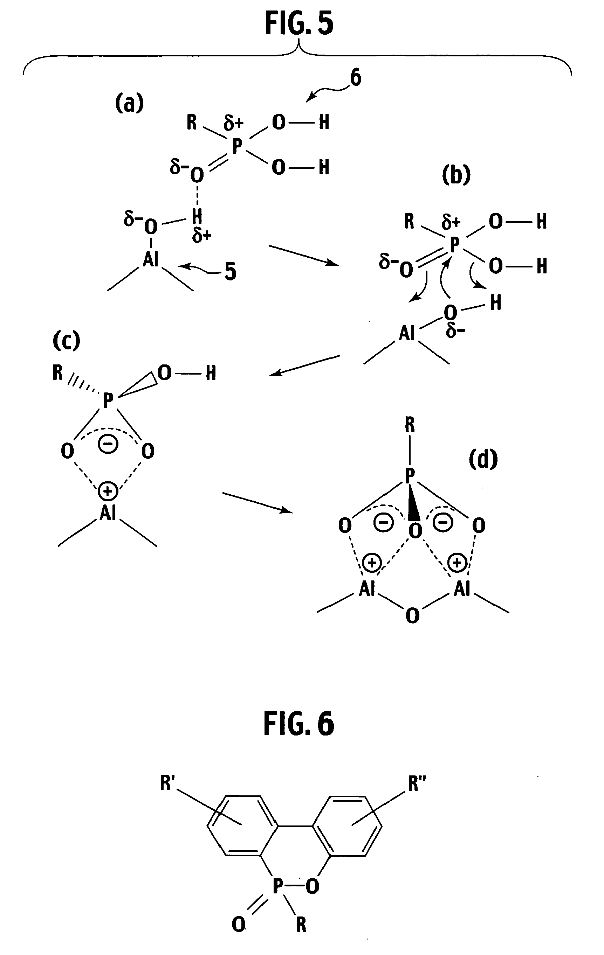

In the present invention, among organic phosphorus compounds, monophenyl acid phosphate exhibits extremely excellent dispersion. The form of boning between the organic phosphorus compound and the metal oxide particles is shown in FIG. 5. First, as shown in FIG. 5(a), an organic phosphorus compound 6 approaches to a metal oxide surface 5. Subsequently, as shown in FIG. 5(b), oxygen atoms in AlOH nucleophilically attack phosphor atoms. This causes the organic phosphorus compound to be bidentate (FIG. 5(c)) or tridentate with respect to the metal oxide surface. This was reported by a research utilizing measurement such as inelastic electron tunneling spectroscopy, multiple reflection absorption infrared spectroscopy, or ²⁷Al-MAS-NMR (see Literature 1 to 5). As described above, the organic phosphorus compound is chemically stably bonded to the metal oxide particles, and hydrophobic groups are perpendicular to the Lewis acid sites in the surface. Accordingly, even a little amount of organic phosphorus compound can achieve a good dispersion effect.
[Literature 1] M. Higo, S. Kamata, Analytical Sciences, vol. 18, p. 227-242, March (2002)
[Literature 2] Gray A. Nitowski, Virgina Polytech. Inst./State Univ. PhD thesis (1998)
[Literature 3] R. Coast, M. Pikus, P. N. Henriksen, G. A. Nitowski, J. Adhesion. Sci. Technol., vol. 10, p. 101-121 (1996)
[Literature 4] R. D. Ramsier, P. N. Henriksen, A. N. Gent, Surface Science, vol. 203, p. 72-88 (1988)
[Literature 5] MK. Templeton, W. H. Weinberg, J. Am. Chem. Soc., vol. 107, p. 774-779 (1985)

On the other hand, strong acid such as *p*-toluenesulfonic acid has high peptization but, in some cases, causes the resin composition to color, considerably degrades the optical properties, cuts molecular chains of resin to reduce molecular weight of resin part in the resin composition and thus significantly degrade the mechanical properties. Weak acid such as acetic acid does not cause a problem such as the reduction in molecular weight, which is involved in the strong acid, but has inadequate peptization. Accordingly, the phosphate esters with an acid group (P-OH) are most excellent in both peptization and smallness of various fears.

The aforementioned acidic phosphate esters especially suitably used in the present invention are expressed by a general formula ROₙP(O)(OH)₃₋ₙ (herein, n=1 or 2). R represents an alkyl group, an aryl group, or the like, and a skeleton of R may contain an oxygen atom. Furthermore, it is preferable that the carbon number of RO or the ester group be 2 or more. The carbon number described here indicates the total number of carbon atoms contained in R. When the carbon number is less than 2, an effect thereof on steric repulsion is small, and a solution with the metal oxide particle composite uniformly dispersed in a later described organic solvent cannot be obtained. Moreover, in some cases, dispersibility of the metal oxide particle composite in the resin composition is lowered.

The aforementioned cyclic phosphorus compounds for use in the present invention are expressed by a general formula shown in FIG. 6. Each of R, R', and R" indicates one or more of a group consisting of a hydrogen atom, a hydroxyl group, a halogen atom, a linear or branched-chain alkyl group with a carbon number of 1, and an aryl group. Further, each of R, R', and R" may contain a halogen atom, an oxygen atom in ether bond, and a sulfur atom in thioether bond and sulfone bond.

Examples of the aforementioned organic phosphorus compound are phosphate esters such as ethyl acid phosphate, butyl acid phosphate, butylpyrophosphate, butoxyethyl acid phosphate, n-octyl acid phosphate, 2-ethylhexyl acid phosphate, *n*-lauryl acid phosphate, oleyl acid phosphate, tetracocyl acid phosphate, (2-methacryloiloxyethyl) acid phosphate, dibutyl phosphate, bis(2-ethylhexyl) phosphate, lauryl acid phosphate, stearyl acid phosphate, ethyleneglycol monoethyl ether acid phosphate, triethyleneglycol monoethyl ether acid phosphate, triethyleneglycol monobutyl ether acid phosphate, monophenyl acid phosphate, monoethyl acid phosphate, monobutyl acid phosphate, monobenzyl acid phosphate, monobutoxyethyl acid phosphate, and diphenyl acid phosphate; phosphite esters such as tris(2-ethylhexyl) phosphite, tridecyl phosphite, trilauryl phosphite, trioleyl phosphite, triphenyl phosphite, and tetra(alkyl)-4,4'-isopropylidene diphenyl phosphite; phosphite ester hydrogen salts such as dilauryl hydrogen phosphite, dioleyl hydrogen phosphite, and diphenyl hydrogen phosphite; and cyclic organic phosphorus compounds such as 9,10-dihydro-9-oxa-10-phosphaphenanthrene-10-oxide, 9-hydro-10-(2,5-dihydroxyphenyl)-9-oxa-10-phosphaphenanthrene-10-oxide, and 10-benzyl-9,10-dihydro-9-oxa-10-phosphaphenanthrene-10-oxide, 6,8-dibromo-9,10-dihydro-9-oxa-10-phosphaphenanthrene-10-oxide. Preferable examples thereof include an organic phosphorus compound expressed by the above general formula ROₙP(O)(OX)₃₋ₙ where R is a substituted or unsubstituted alkyl group with a carbon number of 2 or more.

Among the above organic phosphorus compounds, monoalkyl phosphates and monoaryl phosphates expressed by the above general formula where n=1 can be preferably used. Such phosphates have a high ability of adsorbing to the metal oxide surface and exhibit extremely excellent dispersibility in the solvent. Especially, monophenyl acid phosphate, monoethyl acid phosphate, monobutyl acid phosphate, monobenzyl acid phosphate, and monobutoxyethyl acid phosphate are pronounced in the dispersion effect.

These organic phosphorus compounds may be used singly, or in a combination of two or more thereof. Herein, "a combination of two or more" means that compounds with different chemical species, for example, like butoxyethyl acid phosphate and tetracocyl acid phosphate, may be combined or that butyl acid phosphates expressed by chemical formulae (C₄H₉O)ₙP(OH)₃₋ₙ where n is 1 and 2 may be blended for use.

As long as the object of the present invention can be achieved, the organic phosphorus compound may be bonded to the metal oxide particles in a form of covalent bond, coordination bond, hydrogen bond, or electrostatic bond. At least part of the organic phosphorus compound needs to be bonded in such a form, but all of the organic phosphorus compound is not necessarily bonded in such a form.

The content of the organic phosphorus compound in the metal oxide particle composite of the present invention is not particularly limited as long as parallel light transmittance of the dispersion liquid of the metal oxide particle composite used in a later-described synthesis process of the resin composition is not less than 30%. However, preferably, the content of the organic phosphorus compound is not less than 3% by weight with respect to a solid content of the metal oxide particle composite, and more preferably, not less than 10% by weight. When the content of the organic phosphorus compound is less than 3% by weight, a later-described alumina particle composite dispersion liquid with an alumina particle composite uniformly dispersed in the organic solvent cannot be obtained. Note that the content of the organic phosphorus compound can be qualitatively and quantitatively determined by a combination of apparatuses such as TG-DTA, IR, NMR, and the like.

### (Metal oxide particle composite Manufacturing Method)

In manufacturing the metal oxide particle composite of the present invention, first, the aforementioned metal oxide particles are dispersed in a predetermined organic solvent. Subsequently, the aforementioned organic phosphorus compound is added to the solution with the metal oxide particles dispersed and then stirred to produce the dispersion liquid of the metal oxide particle composite. In the reaction of the metal oxide particles with the organic phosphorus compound, the mixture thereof may be stirred while being irradiated by ultrasonic wave or may be heated. In this dispersion liquid, the organic phosphorus compound chemically reacts with the surfaces of the metal oxide particles and is bonded thereto.

In dispersing the metal oxide particles into the organic solvent, it is preferable to use at least one means selected from an ultrasonic wave, a microbead mill, stirring, and high-pressure emulsion. This allows the dispersion to be performed efficiently and easily.

Moreover, some types of the organic acid phosphorus compound are not dissolved into the organic solvent and do not react with the metal oxide particles. In this case, it is necessary to disperse the organic phosphorus compound into water once. After the solvent is then exchanged from water to the organic solvent by performing centrifugal separation, distillation, and so on, the organic phosphorus compound is reacted with the metal oxide particles. When the metal oxide particles are dispersed into water, it is also preferable to use at least one means selected from the ultrasonic wave, microbead mill, stirring, and high-pressure emulsion. This allows the aforementioned dispersion into water to be performed efficiently and easily.

The dispersion of the metal oxide particles by the ultrasonic wave is performed by putting the metal oxide particles and water into a predetermined ultrasonic dispersion apparatus and driving the apparatus concerned according to a usual procedure. The dispersion of the metal oxide particles by the microbead mill is performed by putting the metal oxide particles and water into a predetermined microbead mill dispersion apparatus and driving the apparatus concerned according to a usual procedure. Moreover, the dispersion of the metal oxide particles by the high-pressure emulsion is performed by putting the metal oxide particles and water into a predetermined high-pressure emulsion apparatus and driving the apparatus concerned according to a usual procedure.

Note that, specifically, the high-pressure emulsion refers to the following operation. The liquid containing the metal oxide particles and the like is pressurized by a pump, passed through a narrow gap between a pulp sheet and a valve at a supersonic flow rate, and cavitation is thus generated at an edge portion of the pulp sheet. Then, a large pressure difference occurs locally following decay of cavities, and the aggregated particles in the liquid are torn off and redispersed into primary particles.

The organic solvent is not particularly limited and can be any solvent. Preferably, it is possible to use a solvent which can be at least partially mixed with the resin to be manufactured and allows the resin composition dissolved therein to be uniformly mixed with the metal oxide particle composite in a process of manufacturing the resin composition later. Specific examples thereof can include: cyclic ethers such as tetrahydrofuran, 1,3-dioxolan, and 1,4-dioxane; alkyl halides such as dichloromethane, 1,2-dichloroethane, chloroform, and 1,1,2,2-tetrachloroethane; aromatic hydrocarbons such as toluene, xylene, chlorobenzene, and dichlorobenzene; and ketones such as methylethylketone, cyclohexanone, and acetone. These organic solvents may be used singly or as a mixture. It is tetrahydrofuran and chloroform that are particularly preferable.

Furthermore, it is preferable that the parallel light transmittance of the dispersion liquid of the metal oxide particle composite be 30% or more. When the parallel light transmittance is less than 30%, the dispersibility of the metal oxide particle composite in the liquid is poor. In a later-described polymerization process, accordingly, the metal oxide particle composite cannot be uniformly dispersed in the resin, thus sometimes making impossible to achieve the original object of the present invention. The parallel light transmittance can be measured based on JIS K7105.

### (Resin Composition)

The above-described metal oxide particle composite can be contained as the filler in a resin, and as a result, a predetermined resin composition can be obtained.

The amount of the metal oxide particle composite blended with the resin is not particularly limited as long as it allows required properties (rigidity, thermal resistance, thermal expansion resistance, and the like) to be obtained. However, the blended amount is preferably within a range from 1 to 50% by weight, and more preferably 1 to 30% by weight. When the blended amount of the alumina particle composite is less than 1% by weight, an effect of blending the metal oxide particle composite is small, and in some cases, the improvements of the properties such as the rigidity, thermal resistance, and thermal expansion resistance are hardly recognized. On the other hand, when the blended amount of the metal oxide particle composite exceeds 50% by weight, not only the increase of the specific gravity cannot be ignored but also a disadvantage occurs in terms of cost, causing a problem that the cost and specific gravity of the resin composition are increased. Moreover, when the blended mount of the metal oxide particle composite is increased, the viscosity of the resin composition is increased, causing a deterioration of the moldability sometimes.

The resin made to contain the alumina particle composite can be polycarbonate resin, acrylic resin, methacrylic resin, polyester resin, styrene resin, amorphous olefin resin, and the like. From the viewpoint of the transparency, thermal resistance, and rigidity, thermoplastic resin such as polycarbonate, acrylic resin, and methacrylic resin are preferable.

The metal oxide particle composite is usable not for the purpose of improving the optical property but for the purpose of reinforcing the resin. In this case, the metal oxide particle composite can be contained not only in the aforementioned thermoplastic resin but also in thermosetting resin.

Examples of the thermoplastic resin used for the purpose of reinforcing the resin can include polyolefin resin such as polyethylene resin, polypropylene resin, and polybutylene resin, olefin modified resin such as maleic anhydride-modified polypropylene resin, polyester resin such as polyethylene terephthalate, polybutylene terephthalate, and polytrimethylene terephthalate, styrene resin such as polystyrene, high impact polystyrene, AS resin, ABS resin, and MBS resin, polyamide resin such as Nylon 6, Nylon 66, and Nylon 610, and further, polyoxymethylene, polyvinyl chloride, polycarbonate, polymethylene methacrylate, and thermoplastic polyimide.

Examples of the thermosetting resin used for the purpose of reinforcing the resin can include epoxy resin, phenol resin, xylene resin, alkyd resin, polyimide, urea resin, melamine resin, and polyurethane resin.

While the above-described resins can be used singly, the resins can be used in combination of two or more thereof.

As the resin used for the purpose of reinforcing the resin, resin which originally has insufficient mechanical strength and is cheap can be suitably used. Specifically, at least one thermosetting resin selected from the polyolefin resin, the polyamide resin, the polyester resin, and the polystyrene resin can be suitably used.

### (Resin Composition Manufacturing Method)

In manufacturing the resin composition of the present invention, first, a liquid with the metal oxide particle composite dispersed in a predetermined organic solvent is prepared. As such dispersion liquid of the metal oxide particle composite, the liquid obtained in manufacturing the aforementioned metal oxide particle composite can be directly used.

As a first manufacturing method, the dispersion liquid of the metal oxide particle composite and the resin separately prepared are mixed and then melted and kneaded, thus obtaining the resin composition with the metal oxide particle composite uniformly dispersed. For the mixer, a twin screw extruder, a vacuum micro mixer/extruder, a labo-plasto mill, and the like are usable, and the mixer is selected and decided depending on the type of the metal oxide particle composite and the type of the solvent in which the metal oxide particle composite is dispersed.

As a second manufacturing method, the dispersion liquid of the metal oxide particle composite and resin monomer are mixed, and the resin monomer is then polymerized, thus obtaining the resin composition. In this method, especially in the case of manufacturing a polycarbonate resin composition, the polymerization is performed by a so-called phosgene method, a so-called ester exchange method, or the like. The phosgene method is a condensation reaction of a dihydroxy compound with phosgene, and the ester exchange method is an ester exchange reaction of carbonate diester and a dihydroxy compound.

The dihydroxy compound is preferably 2,2-bis(4-hydroxydiphenyl)propane (common name: bisphenol A), bis(4-hydroxyphenyl)methane, bis(4-hydroxyphenyl)phenylmethane, bis(3,5-dimethyl-4-hydroxyphenyl)methane, 1-phenyl-1, 1-bis(4-hydroxyphenyl)ethane, 2,2-bis(3,5-dimethyl-4-hydroxyphenyl)propane, 1,1-bis(4-hydroxyphenyl)-3,3,5-trimethylcyclohexane, bis(4-hydroxyphenyl)sulfone, or 4,4'-dihydroxybenzophenone, and, more preferably, 2,2-bis(4-hydroxydiphenyl)propane or 1,1-bis(4-hydroxyphenyl)-3,3,5-trimethylcyclohexane. These dihydroxy compounds may be used singly or in combination of two or more thereof.

The carbonate diester compound is a diaryl carbonate such as diphenylcarbonate or a dialkyl carbonate such as dimethylcarbonate and diethylcarbonate.

In addition, methacrylic and acrylic resin monomers are, for example, (meth)acrylate esters such as methyl(meth)acrylate, ethyl(meth)acrylate, isopropyl(meth)acrylate, *n*-butyl(meth)acrylate, isobutyl(meth)acrylate, *n*-amyl(meth)acrylate, isoamyl(meth)acrylate, *n*-hexyl(meth)acrylate, 2-ethylhexyl(meth)acrylate, octyl(meth)acrylate, decyl(meth)acrylate, dodecyl(meth)acrylate, octadecyl(meth)acrylate, cyclohexyl(meth)acrylate, phenyl(meth)acrylate, and benzyl(meth)acrylate. These monomers may be used singly or in combination of two or more thereof. In the light of the balance between the transparency, the rigidity, the hardness, and the like, it is preferable that methyl(meth)acrylate be a major component. More preferably, methyl(meth)acrylate is 70 mass% or more of the total amount of a monomer polymerizable with the aforementioned unsaturated monomer.

As a third manufacturing method, the dispersion liquid of the metal oxide particle composite and a solution with the resin dissolved in the organic solvent are mixed and stirred. Subsequently, the mixed solution has only the solvent quickly distilled away under reduced pressure at high temperature, thus obtaining the intended resin composition with the metal oxide particle composite uniformly dispersed. As the solvent is being reduced, the viscosity of the solution is raised; however, the stirring of the solution is to be continued until the stirring becomes impossible. In such a way, the metal oxide particle composite can be uniformly dispersed in the resin composition without being aggregated.

Hereinafter, a description is given of the embodiment of the present invention in detail with examples and comparative examples. The present invention is not limited to these examples. Analysis methods and analyzers employed in the present invention are as follows.
(1) Particle shape and length
   Particle shapes were observed by a transmission electron microscope (TEM).

### <Observation method of particle shape>

Samples and pure water were mixed and then treated with an ultrasonic cleaner for 15 minutes. Thereafter, the samples were applied to a hydrophilic carbon-coated collodion film on a copper mesh, followed by drying, thereby preparing observation samples. Electron microscope images of the samples were photographed with a transmission electron microscope (120 kV, 70 mA, 100,000 magnification) and observed.
·TEM copper mesh: Microgrid 150-B mesh, carbon-reinforced, Okenshoji Co., Ltd.
·Transmission electron microscope: JEOL JEM-1200EXII, manufactured by JEOL Ltd.

### <Observation method of particle length>

The micrographs taken by the transmission electron microscope were scanned as electron data by a commercially available scanner, and the particle lengths were measured by using software to measure length on a commercially available personal computer. The short and long axis lengths and thickness were respectively measured for 100 pieces selected at random.
·Software: Scion Image for Windows (registered trademark) manufactured by Scion corp.

### <Observation method of particle cross section>

Particle cross sections were measured by a transmission electron microscope (TEM). Solid alumina particles obtained by freeze drying were put into epoxy resin, thus embedding the particles in the resin. The cured resin was cut into thin sections with a thickness of about 60 to 100 nm by using an ultramicrotome at room temperature. Thereafter, the thin sections were attached to TEM grids, thereby preparing observation samples. Electron microscope images of the samples were photographed by a transmission electron microscope (300 kV, 400,000 magnification) and observed.
·Epoxy resin: EPON812, Okenshoji Co., Ltd.
·Ultramicrotome: FC-S type microtome, manufactured by REICHERT Inc.
·Transmission electron microscope: H-9000, manufactured by Hitachi Ltd.
(2) Identification of alumina
   Observation was made by using a powder X-ray diffractometer.

### <Observation method>

The samples were pressed on non-reflecting plates for measurement, thereby preparing observation samples. The observation samples were measured by the X-ray diffractometer and compared with the JCPDS (Joint Committee on Powder Diffraction Standards) of alumina for identification. ·X-ray diffractometer: RINT-2000, manufactured by Rigaku Corporation

### (3) Qualification and Quantification of particle surface treatment agent

The samples were observed by using TG-DTA, IR, and NMR.
·TG-DTA measurement apparatus: TG-DTA 320, manufactured by Seiko Instruments Inc.; Measurement temperature: room temperature to 900 °C; Temperature rise rate: 10 °C/s
·Nuclear magnetic resonance spectrometer: JNMLA-400, manufactured by JEOL Ltd.; Measured solvent: CDCl₃

### (4) Measurement of mechanical and optical properties

The obtained resin compositions were dried and granulated, followed by hot pressing, thereby obtaining sample films with a thickness of 2 mm. The obtained sheets were measured in terms of the parallel light transmittance, bending strength, flexural modulus, and linear expansion coefficient. The light transmittance was measured by a haze meter (HM-65, manufactured by Murakami Color Research Laboratory). The bending strength and flexural modulus were measured by an autograph (DSC-10T, manufactured by Shimadzu Corporation). The linear expansion coefficient was measured by a thermomechanical analyzer (TMA120C, manufactured by Seiko Instruments Inc.).

### (5) Synthesis of alumina particle

### A. Boehmite particle

Aluminum chloride hexahydrate (2.0 M, 40 ml, 25 °C) was put into a Teflon beaker provided with a mechanical stirrer, and then sodium hydroxide (5.10 M, 40 ml, 25 °C) was dropped into the same for about 6 minutes while being maintained at 10 °C in a temperature-controlled chamber and being stirred (700 rpm). After the end of dropping, the mixture was further continued to be stirred for 10 minutes, and after the end of stirring, the pH of the solution was measured (pH = 7.08). Subsequently, the solution was separated into autoclaves provided with Teflon liners, tightly stoppered, and then left at 120 °C in an oven for 24 hours (first heat treatment). After the end of the first heat treatment, the autoclaves were moved to an oil bath and heated at 180 °C for 30 minutes (second heat treatment). After the end of the second heat treatment, the autoclaves were put into running water and rapidly cooled (about 10 °C) (third heat treatment). After the end of the third heat treatment, the autoclaves were put into the oven again and continued to be heated at 150 °C for 1 day (fourth heat treatment). The autoclaves were then cooled with running water. After a supernatant of the solution in each autoclave was removed by centrifugation (30000 rpm, 30 min), the obtained product was centrifuge washed three times with water and centrifuge washed once with a water-methanol mixed solution (volume ratio: water/methanol = 0.5/9.5), followed by drying using a freeze dryer, thereby obtaining colorless crystal (A). X-ray diffraction revealed that the colorless crystal (A) was boehmite. Moreover, examination of the particle size of the obtained boehmite revealed that the obtained crystal had a needle shape with a long axis length of 125±13 nm, a short axis length of 5.2±0.6 nm, and an aspect ratio of about 20.

### B. γ alumina particle

10 g of the boehmite particle powder obtained in the above (A) was put into an alumina crucible and heated at 600 °C for 5 hours, thus obtaining colorless powder particles (B). Identification of the crystal phase using X-ray diffraction revealed that the powder particles (B) were γ alumina.

### C. α alumina particle

10 g of the boehmite particle powder obtained in the above (A) was put into an alumina crucible and heated at 1100 °C for 3 hours, thus obtaining colorless powder particles (C). Identification of the crystal phase using X-ray diffraction revealed that the powder particles (C) were α alumina.

### (6) Synthesis of alumina particle composite and dispersion liquid

### D. Boehmite particle composite and dispersion liquid

The boehmite particles obtained in the above (A) was added to tetrahydrofuran to obtain a dispersion liquid with 10% by weight of particles, and the dispersion liquid was well stirred and subjected to an ultrasonic dispersion machine for 40 minutes. Thereafter, 15% by weight of butoxyethyl acid phosphate (JP-506H, made by Johoku Chemical Co., Ltd.) with respect to the weight of particles was added thereto, well stirred, and then subjected to the ultrasonic dispersion machine for 90 minutes. The obtained liquid was further treated with a pressure of 50 MPa by a high-pressure emulsifier, thus obtaining a boehmite particle composite dispersion liquid (D) with a boehmite particle composite dispersed in tetrahydrofuran. The parallel light transmittance of this dispersion liquid was 60%. Moreover, the above dispersion liquid was condensed and dried, and the amount of the treatment agent adsorbed on the particles was checked by TG-DTA, which was 13% by weight with respect to the weigh of particles.

A boehmite particle composite dispersion liquid (E) was obtained by the same operation as that of the dispersion liquid production process in the above (D) except using 2-ethylhexyl acid phosphate (JP-508, made by Johoku Chemical, Co., Ltd.) instead of butoxyethyl acid phosphate. The parallel light transmittance of this dispersion liquid was 65%. Moreover, the above dispersion liquid was condensed and dried, and the amount of the treatment agent adsorbed on the particles was checked by TG-DTA, which was 14% by weight with respect to the weigh of particles.

### E. Boehmite particle composite and dispersion liquid

### F. Boehmite particle composite and dispersion liquid

A boehmite particle composite dispersion liquid (F) was obtained by the same operation as that of the dispersion liquid production process in the above (D) except using oleyl acid phosphate (JP-518-0, made by Johoku Chemical, Co., Ltd.) instead of butoxyethyl acid phosphate. The parallel light transmittance of this dispersion liquid was 67%. Moreover, the above dispersion liquid was condensed and dried, and the amount of the treatment agent adsorbed on the particles was checked by TG-DTA, which was 14% by weight with respect to the weigh of particles.

### G. Boehmite particle composite and dispersion liquid

A boehmite particle composite dispersion liquid (F) was obtained by the same operation as that of the dispersion liquid production process in the above (D) except using tetracocyl acid phosphate (JP-524R, made by Johoku Chemical, Co., Ltd.) instead of butoxyethyl acid phosphate and setting the added amount thereof to 11% by weight with respect to the weight of particles. The parallel light transmittance of this dispersion liquid was 70%. Moreover, the above dispersion liquid was condensed and dried, and the amount of the treatment agent adsorbed on the particles was checked by TG-DTA, which was 10% by weight with respect to the weigh of particles.

### H. Boehmite particle composite and dispersion liquid

A boehmite particle composite dispersion liquid (H) was obtained by the same operation as that of the dispersion liquid production process in the above (D) except using tridecyl acid phosphite (JP-310, made by Johoku Chemical, Co., Ltd.) instead of butoxyethyl acid phosphate. The parallel light transmittance of this dispersion liquid was 60%. Moreover, the above dispersion liquid was condensed and dried, and the amount of the treatment agent adsorbed on the particles was checked by TG-DTA, which was 12% by weight with respect to the weigh of particles.

### I. Boehmite particle composite and dispersion liquid

A boehmite particle composite dispersion liquid (I) was obtained by the same operation as that of the dispersion liquid production process in the above (D) except using dioleylhydrogen phosphite (JP-218-OR, made by Johoku Chemical, Co., Ltd.) instead of butoxyethyl acid phosphate. The parallel light transmittance of this dispersion liquid was 65%. Moreover, the above dispersion liquid was condensed and dried, and the amount of the treatment agent adsorbed on the particles was checked by TG-DTA, which was 13% by weight with respect to the weigh of particles.

### J. γ alumina particle composite and dispersion liquid

The γ alumina particles obtained in the above (B) were added to tetrahydrofuran to obtain a dispersion liquid with 10% by weight of particles, and the dispersion liquid was well stirred and subjected to an ultrasonic dispersion machine for 40 minutes. Thereafter, 12% by weight of tetracocyl acid phosphate (JP-524R, made by Johoku chemical Co., Ltd.) with respect to the weight of particles was added thereto, well stirred, and then subjected to the ultrasonic dispersion machine for 90 minutes. The obtained liquid was further treated with a pressure of 50 MPa by a high-pressure emulsifier, thus obtaining a γ alumina particle composite dispersion liquid (J) with a γ alumina particle composite dispersed in tetrahydrofuran. The parallel light transmittance of this dispersion liquid was 55%. Moreover, the above dispersion liquid was condensed and dried, and the amount of the treatment agent adsorbed on the particles was checked by TG-DTA, which was 10% by weight with respect to the weigh of particles.

### K. α alumina particle composite and dispersion liquid

The α alumina particles obtained in the above (C) were added to tetrahydrofuran to obtain a dispersion liquid with 10% by weight of particles, and the dispersion liquid was well stirred and subjected to the ultrasonic dispersion machine for 40 minutes. Thereafter, 12% by weight of tetracocyl acid phosphate (JP-524R, made by Johoku Chemical Co., Ltd.) with respect to the weight of particles was added thereto, well stirred, and then subjected to the ultrasonic dispersion machine for 90 minutes. The obtained liquid was further treated with a pressure of 50 MPa by a high-pressure emulsifier, thus obtaining an α alumina particle composite dispersion liquid (K) with an α alumina particle composite dispersed in the tetrahydrofuran. The parallel light transmittance of this dispersion liquid was 50%. Moreover, the above dispersion liquid was condensed and dried, and the amount of the treatment agent adsorbed on the particles was checked by TG-DTA, which was 9% by weight with respect to the weigh of particles.

### L. Boehmite particle dispersion liquid

The boehmite particles obtained in the above (A) were added to tetrahydrofuran to obtain a dispersion liquid with 10% by weight of particles, and the dispersion liquid was well stirred and subjected to the ultrasonic dispersion machine for 130 minutes. Thereafter, the obtained liquid was further treated with a pressure of 50 MPa by a high-pressure emulsifier, thus obtaining a boehmite particle dispersion liquid (L). This dispersion liquid was slurry.

### M. Boehmite dispersion liquid

Powder of Alumina sol 520 (made by Nissan Chemical Industries Ltd.) was added to tetrahydrofuran into a dispersion liquid with 10% by weight of particles, and the dispersion liquid was well stirred and subjected to the ultrasonic dispersion machine for 130 minutes. Thereafter, the obtained liquid was further treated with a pressure of 50 MPa by a high-pressure emulsifier, thus obtaining a boehmite particle dispersion liquid (M). This dispersion liquid was slurry. Note that, though Alumina sol 520 is commercially available as a water dispersion liquid with a concentration of 20% by weight, Alumina sol 520 here was freeze dried into powder for use. Moreover, the particles have a boehmite structure and are stick-like or particle-like mixture with particle size of 10 to 20 nm.

### N. Alumina particle dispersion liquid

Powder of Aluminum Oxide C (made by Nippon Aerosil Co., Ltd.) was added to tetrahydrofuran to obtain a dispersion liquid with 10% by weight of particles, and the dispersion liquid was well stirred and subjected to the ultrasonic dispersion machine for 130 minutes. Thereafter, the obtained liquid was further treated with a pressure of 50 MPa by a high-pressure emulsifier, thus obtaining an alumina particle dispersion liquid (N). This dispersion liquid was slurry. Note that, Aluminum Oxide C has a spherical shape with a diameter of about 13 nm.

### O. Alumina particle dispersion liquid

Powder of CAM9010 (made by Saint-Gobain Ceramic Material K.K.) was added to tetrahydrofuran to obtain a dispersion liquid with 10% by weight of particles, and the dispersion liquid was well stirred and subjected to the ultrasonic dispersion machine for 130 minutes. Thereafter, the obtained liquid was further treated with a pressure of 50 MPa by a high-pressure emulsifier, thus obtaining an alumina particle dispersion liquid (O). This dispersion liquid was slurry. Note that, CAM9010 have a rugby ball-like shape with a long axis length of about 90 nm and a short axis length of 10 to 15 nm. The particles do not exist singly, but four or five particles are linked together.

### P. Boehmite particle composite and dispersion liquid

A boehmite particle composite dispersion liquid (P) was obtained by the same operation as that of the dispersion liquid production process in the above (D) except using monophenyl acid phosphate instead of butoxyethyl acid phosphate. The parallel light transmittance of this dispersion liquid was 70%. Moreover, the above dispersion liquid was condensed and dried, and the amount of the treatment agent adsorbed on the particles was checked by TG-DTA, which was 10% by weight with respect to the weigh of particles.

### Q. Boehmite particle composite and dispersion liquid

A boehmite particle composite dispersion liquid (Q) was obtained by the same operation as that of the dispersion liquid production process in the above (D) except using monoethyl acid phosphate instead of butoxyethyl acid phosphate. The parallel light transmittance of this dispersion liquid was 75%. Moreover, the above dispersion liquid was condensed and dried, and the amount of the treatment agent adsorbed on the particles was checked by TG-DTA, which was 13% by weight with respect to the weigh of particles.

### R. Boehmite particle composite and dispersion liquid

A boehmite particle composite dispersion liquid (R) was obtained by the same operation as that of the dispersion liquid production process in the above (D) except using monobutyl acid phosphate instead of butoxyethyl acid phosphate. The parallel light transmittance of this dispersion liquid was 69%. Moreover, the above dispersion liquid was condensed and dried, and the amount of the treatment agent adsorbed on the particles was checked by TG-DTA, which was 14% by weight with respect to the weigh of particles.

### S. Boehmite particle composite and dispersion liquid

A boehmite particle composite dispersion liquid (S) was obtained by the same operation as that of the dispersion liquid production process in the above (D) except using monobutoxyethyl acid phosphate instead of butoxyethyl acid phosphate. The parallel light transmittance of this dispersion liquid was 74%. Moreover, the above dispersion liquid was condensed and dried, and the amount of the treatment agent adsorbed on the particles was checked by TG-DTA, which was 17% by weight with respect to the weigh of particles.

### (7) Manufacture of Resin Composition

### (Example 1)

The aforementioned boehmite particle composite dispersion liquid (D) and polycarbonate resin (Novarex 7030A, made by Mitsubishi Engineering-Plastics Corporation) were put into a reaction vessel provided with a decompressor, a mechanical stirrer, and a reflux unit so that the content of the particle composite in resin composition to be obtained was 10% by weight, and dichloromethane was then added thereto as an additional solvent and stirred. Subsequently, the system was gradually depressurized by using a pressure reduction line, thereby distilling away the solvent. Thereafter, the temperature in the reaction vessel was further increased to completely eliminate the solvent, thus obtaining a polycarbonate resin composition. The obtained resin composition is dried to be granulated, and various sample pieces were obtained by the aforementioned method.

### (Example 2)

Sample piece was produced in the same manner as that of Example 1 except using the boehmite particle composite dispersion liquid (E) instead of the boehmite particle composite dispersion liquid (D).

### (Example 3)

Sample piece was produced in the same manner as that of Example 1 except using the boehmite particle composite dispersion liquid (F) instead of the boehmite particle composite dispersion liquid (D).

### (Example 4)

Sample piece was produced in the same manner as that of Example 1 except using the boehmite particle composite dispersion liquid (G) instead of the boehmite particle composite dispersion liquid (D).

### (Example 5)

Sample piece was produced in the same manner as that of Example 1 except using the boehmite particle composite dispersion liquid (H) instead of the boehmite particle composite dispersion liquid (D).

### (Example 6)

Sample piece was produced in the same manner as that of Example 1 except using the boehmite particle composite dispersion liquid (I) instead of the boehmite particle composite dispersion liquid (D).

### (Example 7)

Sample piece was produced in the same manner as that of Example 1 except using the γ alumina particle composite dispersion liquid (J) instead of the boehmite particle composite dispersion liquid (D).

### (Example 8)

Sample piece was produced in the same manner as that of Example 1 except using the α alumina particle composite dispersion liquid (K) instead of the boehmite particle composite dispersion liquid (D).

### (Example 9)

The aforementioned boehmite particle composite dispersion liquid (G), bisphenol A, and diphenyl carbonate were put into a reaction vessel provided with a decompressor, a mechanical stirrer, and a reflux unit so that the content of the particle composite in resin composition to be obtained was 10% by weight, and furthermore, proper amounts of cesium carbonate and tetrahydrofuran were added thereto. The mixture was stirred for one hour with the temperature being gradually increased. Subsequently, the system was gradually depressurized by using a pressure reduction line, thereby distilling away tetrahydrofuran. Thereafter, the temperature was further increased, and the obtained product was preheated at about 160 °C for 20 minutes, thereby initiating a condensation reaction of the diarylcarbonate compound and bisphenol.

Subsequently, the temperature of the reaction system was increased to 200 °C over 30 minutes. At this temperature, condensation was carried out for about 150 minutes at a reduced pressure of 15 mmHg or less while the mixture was being stirred. The temperature of the reaction system was then increased to 250 °C over 30 minutes, and at this temperature, the mixture was stirred at a reduced pressure of 10 mmHg or less for about 30 minutes, thus reducing an oligomer component unreacted. Finally, the mixture was ripened for 20 minutes in a range of 260 °C to 290 °C with the reduced pressure maintained, thereby obtaining a polycarbonate resin composition. The obtained resin composition was dried and granulated, and various sample pieces were obtained by the aforementioned method.

### (Example 10)

The aforementioned boehmite particle composite dispersion liquid (G) was freeze-dried and further dried at room temperature and reduced pressure for 12 hours, thus obtaining colorless powder of the boehmite particle composite. This powder and polycarbonate resin (Novarex 7030A, made by Mitsubishi Engineering-Plastics Corporation) were previously dry-blended so that the content of the particle composite in the resin composition to be obtained was 10% by weight and then melted and kneaded using a vacuum micro mixer/extruder (IMC-1170B, made by Imoto Machinery Co., Ltd.). The kneading was performed for 10 minutes under the following conditions: the reduced pressure in the vacuum chamber was 10 mmHg or less, the temperature inside a furnace and of a rotor was 260 °C, and rotational speed of the rotor was 15 rpm. After the kneading, the obtained resin composition was dried and granulated, and various sample pieces were obtained by the aforementioned method.

### (Example 11)

Sample piece was produced in the same way as that of Example 1 except using the boehmite particle composite dispersion liquid (P) instead of the boehmite particle composite dispersion liquid (D).

### (Example 12)

Sample piece was produced in the same way as that of Example 1 except using the boehmite particle composite dispersion liquid (Q) instead of the boehmite particle composite dispersion liquid (D).

### (Example 13)

Sample piece was produced in the same way as that of Example 1 except using the boehmite particle composite dispersion liquid (R) instead of the boehmite particle composite dispersion liquid (D).

### (Example 14)

Sample piece was produced in the same way as that of Example 1 except using the boehmite particle composite dispersion liquid (S) instead of the boehmite particle composite dispersion liquid (D).

### (Comparative Example 1)

Sample piece was produced in the same way as that of Example 1 except using the boehmite particle dispersion liquid (L) instead of the boehmite particle composite dispersion liquid (D).

### (Comparative Example 2)

Sample piece was produced in the same way as that of Example 1 except using the boehmite particle dispersion liquid (M) instead of the boehmite particle composite dispersion liquid (D).

### (Comparative Example 3)

Sample piece was produced in the same way as that of Example 1 except using the alumina particle dispersion liquid (N) instead of the boehmite particle composite dispersion liquid (D).

### (Comparative Example 4)

Sample piece was produced in the same way as that of Example 1 except using the alumina particle dispersion liquid (O) instead of the boehmite particle composite dispersion liquid (D).

### (Evaluation Result)

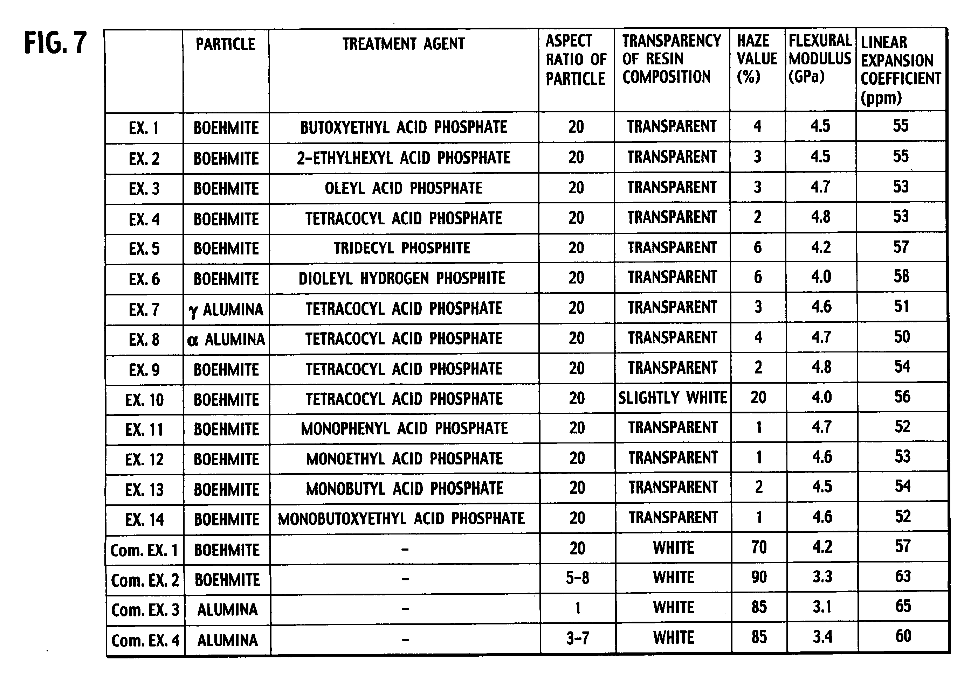

Evaluation results of the examples and comparative examples are shown in FIG. 7.

As apparent from FIG. 7, the resin compositions according to the examples each including the metal oxide particle composite containing the organic phosphorus compound of the present invention, except Example 10, had lower haze values and higher transparency and had more excellent elastic modulus and linear expansion coefficient than those of the resin compositions of the comparative examples each including only the metal oxide particles but including no organic phosphorus compound like the conventional arts. Among these resin compositions, the properties of especially monoalkyl and monoaryl phosphates were pronouncedly improved. In terms of the resin composition of Example 10, the dispersion thereof was somewhat insufficient, and the properties thereof were a little poorer than those of the other examples but better than those of the comparative examples. On the other hand, in the comparative examples, even with the particles having a high aspect ratio, especially the transparency and color were degraded when surface modification was not performed. Moreover, with the particles having a low aspect ratio, even the mechanical properties were degraded.

As described above, according to the present invention, it is possible to provide a resin composition having excellent mechanical strength while retaining the transparency. As a result, the resin composition can be used as automotive organic glass, which could not been implemented in terms of the strength, and can contribute to significant weight reduction compared to the conventional inorganic glass. Moreover, the resin composition can be used for other applications including transparent building materials of structural buildings and the like.

However, the present invention is not limited to the aforementioned contents, and various modifications and alterations can be made without departing from the scope of the present invention. For example, the resin composition of the present invention is, when necessary, can be added with an antioxidant, a thermal stabilizer, an ultraviolet absorber, a lubricant, a mold release agent, dyestuff, a colorant including pigment, an attachment agent of an additive, a nucleating agent, and the like singly or in proper combination. The oxidant and thermal stabilizer are hindered phenol, hydroquinone, thioether, phosphates, substitutions thereof, or the like. The ultraviolet absorber is resorcinol, salycylate, benzotriazole, benzophenone, and the like. The lubricant and mold release agent are silicone resin, montanic acid or salts thereof, stearic acid or salts thereof, stearyl alcohol, stearyl amide, or the like. The dyestuff is nitrosin or the like. The pigment is cadmium sulfide, phthalocyanine, or the like. The attachment agent is silicone oil or the like. The nucleating agent is talc, caolin, or the like.

Entire contents of Japanese Patent Applications No. P2005-181756 with a filing date of June 22, 2005 and No. P2005-313187 with a filing date of October 27, 2005 are herein incorporated by reference.

Although the invention has been described above by reference to certain embodiments of the invention, the invention is not limited to the embodiments described above and modifications may become apparent to these skilled in the art, in light of the teachings herein. The scope of the invention is defined with reference to the following claims.

## Claims

1. A resin composition, comprising:
resin; and
a metal oxide particle composite (1) contained in the resin as filler, the metal oxide particle composite (1) comprising: a metal oxide particle (2); and an organic phosphorus compound (3) chemically bonded to a surface of the metal oxide particle (2).

2. A resin composition according to claim 1,
wherein the organic phosphorus compound (3) is at least one of phosphate ester and phosphite ester.

3. A resin composition according to claim 2,
wherein the organic phosphorus compound (3) is acidic phosphate ester.

4. A resin composition according to claim 3,
wherein the acidic phosphate ester is expressed by a general formula ROₙP(O)(OH)₃₋ₙ, where n is 1 or 2, and R indicates an alkyl group or an aryl group).

5. A resin composition according to claim 3 or 4,
wherein in the acidic phosphate ester, a carbon number of an ester group thereof is 2 or more.

6. A resin composition according to any one of claims 3 to 5,
wherein the acidic phosphate ester is at least one of monoalkyl phosphate and monoaryl phosphate expressed by the general formula where n=1.

7. A resin composition according to claim 6,
wherein the acidic phosphate ester is at least one selected from a group consisting of monophenyl acid phosphate, monoethyl acid phosphate, monobutyl acid phosphate, monobenzyl acid phosphate, and butoxyethyl acid phosphate.

8. A resin composition according to any one of claims 1 to 7,
wherein the content of the organic phosphorus compound (3) in the metal oxide particle composite (1) is not less than 3% by weight with respect to a solid content of the metal oxide particle composite (1).

9. A resin composition according to any one of claims 1 to 8,
wherein the metal oxide particle (2) is an alumina particle expressed by a general formula (I), the alumina particle having a short axis length of 1 to 10 nm, a long axis length of 20 to 700 nm, and an aspect ratio of 5 to 100,
Al₂O₃·nH₂O Formula (I)
Where n is 0 or more.

10. A resin composition according to claim 9,
wherein the alumina particle has a hollow (4) inside.

11. A resin composition according to claim 9 or 10,
wherein n is 0 in the formula (I), and the alumina particle is α alumina or γ alumina.

12. A resin composition according to claim 9 or 10,
wherein n is 1 in the formula (I), and the alumina particle is boehmite.

13. A resin composition according to any one of claims 1 to 12,
wherein a blended amount of the metal oxide particle composite (1) is within a range from 1 to 50% by weight.

14. A resin composition according to any one of claims 1 to 13,
wherein the resin is at least one thermoplastic resin selected from a group constituting of polycarbonate resin, methacrylic resin, acrylic resin, polyester resin, styrene resin, and amorphous olefin resin.

15. A method of manufacturing a resin composition, comprising:
preparing a dispersion liquid with a metal oxide particle composite (1) dispersed in an organic solvent, the metal oxide particle composite (1) comprising: a metal oxide particle (2); and an organic phosphorus compound (3) chemically bonded to surfaces of the metal oxide particle (2);
mixing the dispersion liquid and resin.

16. A method of manufacturing a resin composition according to claim 15,
wherein the dispersion liquid and the resin are mixed by being melted and kneaded.

17. A method of manufacturing a resin composition according to claim 15,
wherein the dispersion liquid and the resin are mixed by mixing the dispersion liquid and monomer of the resin and polymerizing the monomer.

18. A method of manufacturing a resin composition according to claim 15,
wherein the dispersion liquid and the resin are mixed by mixing and stirring the dispersion liquid and a solution with the resin dissolved in an organic solvent and distilling away the organic solvent.

19. A method of manufacturing a resin composition according to any one of claims 15 to 18,
wherein a parallel light transmittance of the dispersion liquid is not less than 30%.
